# EUROPEAN PATENT SPECIFICATION

(11) **EP 0 689 908 B1**
(45) Date of publication and mention of the grant of the patent: **18.09.2002**
(21) Application number: 95108724.6
(22) Date of filing: 07.06.1995
(51) Int. Cl.: B27K 3/15, C04B 41/48, C08G 18/50, C08G 18/08

(54) **Fluorinated polyurethanes**
Fluorisierte Polyurethane
Polyuréthanes fluorés

(30) Priority: 13.06.1994 IT MI941225
(43) Date of publication of application: 03.01.1996
(73) Proprietor: AUSIMONT S.p.A., I-20121 Milano (IT)
(72) Inventor: Lin, Shiow-Ching, Randolph, NJ 07869 (US); Burks, Steven John, Long Valley, NJ (US); Tonelli, Claudio, Concorezzo, Milano (IT); Lenti, Daria, Valenza Po, Alessandria (IT)
(74) Representative: Sama, Daniele, Dr.

(56) References cited:
- EP-A- 0 273 449
- EP-A- 0 337 312
- EP-A- 0 430 266
- EP-A- 0 533 159

## Description

The present invention relates to certain fluorinated polyurethanes which can be used in a process for protecting wood, marble, stones, bricks, plaster, cement and similar materials from the action of atmospheric and polluting agents.

In particular the process relates to the application of a coating endowed with superior oil- and water-repellence combined with high durability.

It is known the use of perfluoropolyethers for surface applications on the above mentioned materials conferring high hydrophobic and oleophobic properties to the surface of the treated materials. See for instance EP-A-59100.

The perfluoropolyethers utilized in the aforesaid patent had inert end groups, namely perfluoroalkyl radicals.

The drawback of these products is that the presence of porosity in the material to be protected leads to phenomena of slow absorption, thus the protection effectiveness decreases in time. Moreover these products tend to be washed away by atmospheric agents.

It was needed, therefore, the use of additional treatments to protect surfaces, even though the part migrating inside had a barrier effect which reduced the amount of product to be utilized for subsequent treatments.

To ovecome this drawback, it is known in the art the use of functionalized perfluoropolyethers, i.e. having end-groups capable of fixing to the substrate to be protected, thus reducing the perfluoropolyether mobility and increasing the protection durability of the treated product. See for instance EP Patent applications EP-A-215,492 and 192,493.

Even though durability is improved with respect to the perfluoropolyethers with neutral end-groups of the patent above, it has been noticed that, depending on the material porosity, also these products do not give optimum durability, therefore also in this case subsequent superficial treatments are necessary.

It is also known the use of dispersions or aqueous emulsions of fluorinated polyurethanes for treating the above mentioned materials. See for instance European patent application EP-A-533 159. The results obtained as initial protection are similar.

EP-A-533159 discloses aqueous dispersion of fluorinated polyurethanes having a high molecular weight and a high fluorine content. Said polyurethanes are made by reacting an organic diisocyanate with a mixture of diols containing ionizable groups, macroglycols comprising polyols and at least 35% by weight of one or more hydroxy-ended fluoropolyethers.

It has now been surprisingly and unexpectedly found that it is possible to increase initial effectiveness of the protective treatment as to oil and water-repellence combined with a high durability of the superficial treatments on the above mentioned materials, and in particular on wood and cement, if the products of the present invention described hereinafter are utilized.

Object of the present invention is therefore a process for protecting wood, marble, stones, bricks, plaster, cement and similar materials used in particular in building, from the degradation caused by atmospheric and polluting agents, by applying on the surface of said materials a protective agent in terms of an aqueous dispersion of fluorinated polyurethanes as defined in claim 1.

The present invention is based on the unexpected fact that with the polyurethanes of the present invention it is possible to obtain an increase as to oil- and water-repellence combined with an increase of the durability of the superficial treatment and therefore a maintenance of oil- and wacer-repellence in time with respect to the known and exemplified products mentioned above.

The preparation of fluorinated polyurethanes having high molecular weight and high fluorine content is described for instance in US-A-4,983,666 and in European patent application. EP-A-533 159, but using hydrophilic ionic groups present as side groups of the main polymeric chain as defined in claim 1.

In practice the polyurethanes of the invention are obtained by a two-stage polymerization according to various known processes which have in common the 1^{st} step wherein a fluorinated diisocyanate prepolymer is prepared in a polar organic solvent, for instance ketones and acetates, and a 2^{nd} step which, depending on the process, consists in the steps as defined in the claims.

In the 1^{st} step the diisocyanate fluorinated prepolymer is prepared according to known techniques, for instance by reaction of a (per)fluoropolyether (PFPE) having alcohol or acid end-groups with hydrogenated diisocyanates.

The PFPE with said end-groups can optionally be mixed with hydrogenated macrodiols, for instance PTMEG (polytetramethylenglycol), PCL (polycaprolactonediol), PEG (polyethyleneglycol), PPG (polypropylenglycol), PBDH (polybutadiendiol).

In the 2nd step ionomers are introduced as defined in the claims.

The ionomers utilized according to the present invention correspond to the formula: 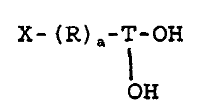 wherein T is an alkylene radical from 1 to 20 C atoms , X = N(R₁)₂, (R)ₐ is CR₁R₂ and wherein R₁ and R₂ are equal or different from each other being either H or aliphatic radicals having from 1 to 10 carbon atoms, and wherein a is an integer from 1 to 20.

As such diol ionomer structures containing substituted amino groups, for instance the following can be cited: 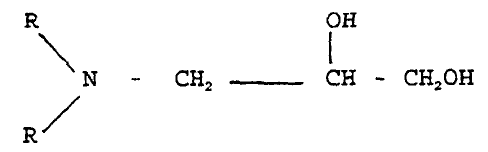 wherein R has the meaning indicated above for R₁, 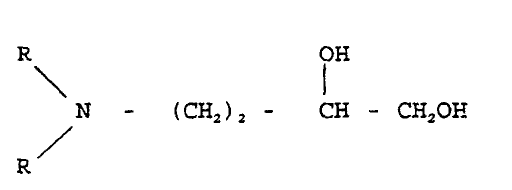 wherein R has the meaning indicated above for R₁, 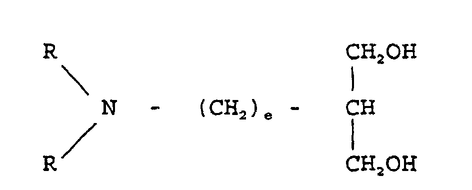 e = 1-10.

PFPE to be utilized in the 1st step are, for instance, those having an average molecular weight of from 500 to 3000 and preferably from 1000 to 2000, and containing repetitive units selected from the following: 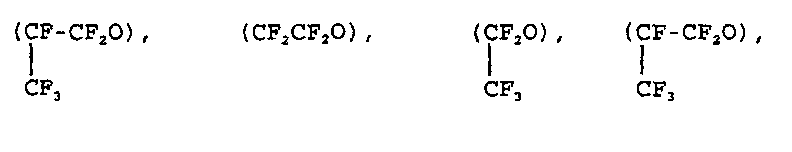 (CF₂CF₂CF₂O), (CF₂CF₂CH₂O), said units being statistically distributed in the PFPE polymeric chain.

In particular they belong to one or more of the following classes:
1) 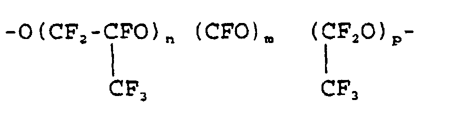 having "random" distribution of perfluorooxyalkylene units, and n, m, p have mean values such as to meet the aforesaid requirements of average molecular weight;
2) -O(CF₂CF₂O)_{n'} (CFO)_{m'} - with random distribution of the perfluorooxyalkylene units, m' and n' are integers such as to meet the aforesaid requirements;
3) -O(CF₂CF₂O)_{n''} (CF₂O)_{m"} 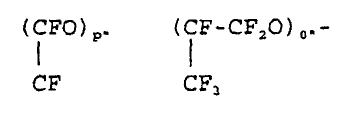 m", n", p", o" are integers such as to meet the requirements indicated above;
4) 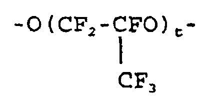 t is an integer such as to meet the aforesaid requirements;
5) -O(CF₂CF₂O)_{z}
   z is an integer such as to meet the aforesaid requirements;
6) -O(CF₂CF₂CF₂O)ₛ - or -O(CF₂CF₂CH₂O)-
   s in an integer such as to meet the aforesaid requirements.

The fluorinated polyurethane has high molecular weight, generally from 10000 to 50000, preferably 20000-30000; the F content is preferably from 30 to 40% by weight.

Some working examples of the present invention are reported hereinafter, the purpose of which is only illustrative but not limitative of the scope of the invention itself.

### Preparation of fluorinated polyurethanes

### EXAMPLE 1A - Fluorinated anionic polyurethane (comparative)

A fluoropolyoxyalkylene diol (Fluorolink^{(R)} D) having a hydroxy equivalent weight of 1020 g/equivalent was slowly charged into a flask containing 22.23 g of isophoron diisocyanate (molecular weight = 222.29 g/mole) and 2 drops of dibutyl tin dilaurate in 4 hours.

An opaque immiscible mixture was obtained. After stirring for further two hours, the reaction mixture became clear and the viscosity increased. 50 g of N-methyl pyrrolidone were added to this reactive mixture, together with 6.71 g of 2,2-bis (hydroxymethyl) propionic acid. Non-miscibility was noticed again. The reaction temperature was increased to 80°C and kept for 8 hours for producing a clear product having high viscosity. 50 additional g of N-methyl pyrrolidone were loaded to dilute the solution. The reaction temperature was lowered to 60°C and 3.0 g of a solution of concentrated ammonia (content in ammonia of 28%) were loaded. After homogeneously mixing, deionized water was loaded to give an aqueous dispersion/solution with a resin content of 23% by weight.

### EXAMPLE 2 - Fluorinated cationic polyurethane

A fluoropolyoxyalkylene diol (Fluorolink^{(R)} D) having an hydroxy equivalent weight of 1020 g/equivalent was slowly loaded in a flask containing 22.23 g of isophoron diisocyanate (molecular weight = 222.29 g/mole) and 2 drops of dibutyl tin dilaurate for over 4 hours.

After stirring for futher two hours the reaction mixture became transparent and the viscosity increased. 50 g of N-methyl pyrrolidone were added to this reaction mixture, together with 5.96 g of 3-(dimethylamino)-1,2-propandiol. Non-miscibility was noticed. The reaction temperature was increased to 80°C and kept for 8 hours to produce a transparent product having high viscosity. 50 additional g of N-methyl pyrrolidone were loaded to dilute the solution. The reaction temperature was lowered to 60°C and 3.0 g of acetic acid were charged. After homogeneously mixing, deionized water was loaded to give an aqueous dispersion/solution with a resin content of 22% by weight.

### EXAMPLE 2A (comparative)

Example 2 was repeated using however as tertiary amine N-methyldiethanolamine having formula CH₃N(CH₂CH₂OH)₂ in equimolar amount.

An aqueous dispersion/solution having 27% by weight of resin was obtained.

### APPLICATIVE EXAMPLES

Application of fluorinated polyurethanes as protective agents for imparting water- and oil-repellence properties to wood and building materials. Methods utilized for the characterization:

### Test No. 1 Water-repellence evaluation

The resistance of the surface to be wet by water/alcohol solutions is measured, classifying the water-repellence with a number corresponding to the composition of solutions having different water/isopropanol ratio. A drop is deposited on the surface and if after 10 seconds no absorption is noticed, the subsequent classification number is evaluated.

### WATER-REPELLENCE (WR)

| Class | Composition |
|---|---|
| W | water |
| 1 | 90/10 water/isopropanol |
| 2 | 80/20 water/isopropanol |
| 3 | 70/30 water/isopropanol |
| 4 | 60/40 water/isopropanol |
| 5 | 50/50 water/isopropanol |
| 6 | 40/60 water/isopropanol |
| 7 | 30/70 water/isopropanol |
| 8 | 20/80 water/isopropanol |
| 9 | 10/90 water/isopropanol |
| 10 | isopropanol |

A higher number indicates a greater water-repellence.

A value of at least 4 or 5 as water-repellence is condidered satisfactory.

### Test No. 2 Oil-repellence evaluation

The resistance of the surface to be wet by oils is measured, classifying the oil-repellence with a number corresponding to hydrocarbons having different surface tension. A drop is deposited on the surface and if after 30 seconds no absorption is noticed, the subsequent classification number is evaluated.

### OIL-REPELLENCE (OR)

| Class | Oil | (Dyne/cm) | Pascal |
|---|---|---|---|
| 1 | Vaseline oil | (31.5) | 3.15 |
| 2 | Vaseline/n-hexadecane (65/35) | (29.5) | 2.95 |
| 3 | hexadecane | (27.3) | 2.73 |
| 4 | n-tetradecane | (26.4) | 2.64 |
| 5 | n-dodecane | (24.7) | 2.47 |
| 6 | n-decane | (23.5) | 2.35 |
| 7 | n-octane | (21.4) | 2.14 |
| 8 | n-heptane | (19.8) | 1.98 |

A higher number indicates a greater oil-repellence.

A value of at least 4 as oil-repellence is condidered satisfactory.

### Test No. 3 - Water and oil-repellence evaluation for prolonged contact times

The test evaluates the time necessary for a water drop and a hexadecane drop to be absorbed by the treated substrate in comparison with the untreated surface.

### Test No. 4 - Water and oil-repellence evaluation after surface washing

The test evaluates with the methods described for test Nos. 1 and 2 the water- and oil-repellence of a surface after prolonged washing. An artificial rain is simulated submitting the test pieces to a water jet (capacity: about 4 liters/minute) for 30 minutes.

The maintenance of water- and oil-repellence or at most the variation of a class is desirable.

### EXAMPLE 3

### Water- and oil-repellence application test of the product of Example 2 applied on asbestos cement (Cembonit^{(R)} of Società Italiana Lastre having 1.4 Kg/dm³ density.

The aqueous composition of the cationic fluorinated polyurethane (PU) obtained according to the method of Example 2 was diluted to 5% by weight with water and utilized for brush treating of small asbestos cement plates. Amounts corresponding to about 5 and 10 g of polymer/m² were deposited.

After drying for 48 hours at room temperature, the water- and oil-repellence was evaluated according to test Nos. 1 and 2. The obtained results are reported in Table 1.

### EXAMPLE 4

### Water- and oil-repellence application test of the product of Example 2 applied on asbestos cement (of Example 3)

The aqueous composition of the cationic fluorinated polyurethane (PU) obtained according to the method of Example 2A was diluted to 5% by weight with water and utilized for brush treating of asbestos cement plates. Amounts corresponding to about 5 and 10 g of polymer/m² were deposited.

After drying for 48 hours at room temperature the water- and oil-repellence was evaluated according to test Nos. 1 and 2. The obtained results are reported in Table 1.

**TABLE 1**

| Sample | g/m² | WR | OR |
|---|---|---|---|
| PU Example 2 | 0 | immediate abs. | immediate abs. |
| | 4 | 4 | 5 |
| | 9 | 5 | 6 |
| PU Example 2A | 5 | 2 | 5 |
| | 12 | 3 | 6 |

### EXAMPLE 5

### Water- and oil-repellence application test with prolonged contact times with water and hexadecane of the products of Example 2 and 2A applied on asbestos cement

The water- and oil-repellence given from the samples of fluorinated polyurethane, obtained according to the method described in examples 2 and 2A, to asbestos cement surfaces were evaluated according to test No. 3 after drying of 48 hours at room temperature. The polyurethanes were applied in the form of aqueous systems diluted to 5% by weight as described in examples 3 and 4. The experimental data (Table 2) report the time at which initial absorption or penetration of water and hexadecane in the substrates is detected.

**TABLE 2**

| Sample | g/m² | water abs. | hexadecane abs. |
|---|---|---|---|
| PU Example 2 | 0 | immediate | immediate |
| | 4 | 45 minutes | 30 minutes |
| | 9 | 2 hours | 2 hours |
| PU Example 2A | 5 | 15 minutes | 15 minutes |
| | 12 | 20 minutes | 20 minutes. |

The data reported in Table 2 qualitatively confirm the results of Table 1 and show that the fluorinated polyurethane whose preparation is described in example 2 has a better water-repellence compared with the fluorinated polyurethane whose preparation is described in example 2A. The best oil-repellence of the sample relating to example 2 is maintained also with prolonged contact times with hexadecane.

### EXAMPLE 6

### Water- and oil-repellence application test with prolonged contact times with water and hexadecane of the products of Examples 2 and 2A applied on wood.

The aqueous compositions of the cationic fluorinated polyurethane (PU) obtained according to the method of Example 2 and 2A were diluted to 5% by weight with water and utilized for brush treating of pinewood plates. Amounts corresponding to about 5 and 10 g of polymer/m² were deposited.

After drying for 48 hours at room temperature the water- and oil-repellence was evaluated according to test No. 3. The obtained results are reported in Table 3.

**TABLE 3**

| Sample | g/m² | water abs. | hexadecane abs. |
|---|---|---|---|
| PU Example 2 | 0 | 3 minutes | immediate |
| | 5 | 3 hours | 30 minutes |
| | 9 | 3 hours | 30 minutes |
| PU Example 2A | 7 | 1 hour | 20 minutes |
| | 9 | 1 hour | 30 minutes. |

### EXAMPLE 7

### Water- and oil-repellence application test of the products of Examples 2 and 2A and of comparative products applied on wood.

The aqueous compositions of the cationic fluorinated polyurethane (PU) obtained according to the method of Example 2 and 2A were diluted to 5% by weight with water and utilized for brush treating of oak-veneered wood plates.

As comparison (Ex. 7A) the same type of substrate was treated with an aqueous solution at 2% by weight of a perfluoropolyether product having the structure of formula 1 with number average molecular weight 700, monofunctional with COO⁻NH₄⁺ end-groups, the other end-group being preferably a perfluoroalkyl; and (Ex. 7B) with a 5% by weight solution in Algofrene^{(R)} 113 of a fluoropolyether having -CH₂OH end-groups (Fluorolink^{(R)} D) having number molecular weight 1000 (equivalent weight 540).

Amounts corresponding to about 5 and 10 g of polymer/m² were deposited.

After drying for 48 hours at room temperature, the water- and oil-repellence was evaluated according to test Nos 1 and 2. The results are reported in Table 4.

**TABLE 4**

| Sample | g/m² | WR | OR |
|---|---|---|---|
| PU Example 2 | 0 | W | 2 |
| | 5 | 5 | 5 |
| | 9 | 6 | 6 |
| PU Example 2A | 4.5 | 3 | 4 |
| | 10 | 4 | 5 |
| Product Ex. 7B | 5 | 2 | 3 |
| | 11 | 3 | 4 |
| Product Ex. 7A | 5 | W | 3 |
| | 8 | W | 3. |

### EXAMPLE 8

### Water- and oil-repellence application test after washing the products of Examples 2 and 2A and comparative products applied on wood.

The wood plates treated as shown in Example 7 are submitted to a prolonged washing as described in test No. 4. After drying for 3 days at room temperature the water-repellence according to test No. 1 was evaluated, obtaining the results described in Table 5.

**TABLE 5**

| Sample | g/m² | WR |
|---|---|---|
| PU Example 2 | 0 | W |
| | 5 | 4 |
| | 9 | 4 |
| PU Example 2A | 4.5 | 2 |
| | 10 | 3 |
| Product Ex. 7B | 5 | W |
| | 11 | W. |

## Claims

1. Fluorinated polyurethanes wherein the fluorinated part is made of (per)fluoropolyether units in the polyurethane chain, said polyurethane having number average molecular weight of at least 9000 and a fluorine content higher than 25% by weight and having in their structure hydrophilic cationic groups present as side groups with respect to the polyurethane polymeric chain, said hydrophilic cationic groups being separated from the polyurethane chain by a bivalent alkylenic radical (R)ₐ, wherein R is CR₁R₂, a is an integer from 1 to 20 and wherein, R₁ and R₂, equal or different from each other, are H, aliphatic radicals having from 1 to 10 carbon atoms;
said fluorinated polyurethane obtainable by a two-step polymerization process wherein in the 1st step a fluorinated diisocyanate prepolymer is prepared by reacting a (per)fluoropolyether (PFPE) having alcohol or acid end groups with hydrogenated diisocyanates in an an organic solvent, and the 2^{nd} step consists in:
I) chain-extension with traditional chain-extenders and ionomers having the following formula: 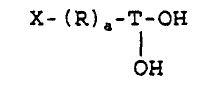 wherein T is an alkylene radical from 1 to 20 C atoms, X = N(R₁)₂, R has the meaning indicated above; then subsequent dispersion in water and salification with polymerization completion by formation of ureidic bonds; or
II) introduction of ionomers as defined in point I) and then dispersion, salification and polymerization by chain-extension in water with diamines; or
III) introduction of ionomers as defined in point I) and completion of the chain-extension in solvent, to obtain the polymer, and then subsequent dispersion and salification in water of the so obtained polymer.

2. Polyurethanes according to claim 1, wherein the ionomer has formula: 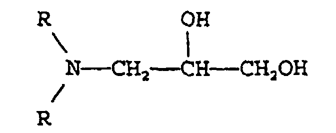 wherein the R groups have the same meaning of R₁.

3. Polyurethanes according to claims 1-2, wherein the (per)fluoropolyether units have average molecular weight comprised from 500 to 3000 and contain repetitive units selected from: 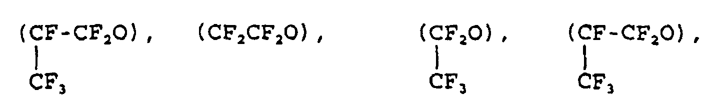 (CF₂CF₂CF₂O), (CF₂CF₂CH₂O), said units being statistically distributed along the polymeric chain.

4. Polyurethanes according to claim 3, wherein the (per)fluoropolyether units have formula :
- (OCF₂CF₂O)_{n'} (CFO)_{m'} -
with random distribution of perfluorooxyalkylene units, m' and n' are integers such as to have a molecular weight from 500 to 3000.

5. Polyurethanes according to claims 1-4, wherein the molecular weight of the fluorinated polyurethane ranges from 20000 to 30000, the fluorine content from 30% to 40% by weight.

6. Process for protecting wood, marble, stones, bricks, plaster or cement from degradation caused by atmospheric and polluting agents, which comprises applying on the surface of said materials as protective agents aqueous dispersions of the fluorinated polyurethanes of claims 1-5.

7. Process for preparing the polyurethanes of claim 1 by a two-step polymerization wherein in the 1^{st} step a fluorinated diisocyanate prepolymer is prepared by reacting a (per)fluoropolyether (PFPE) having alcohol or acid end groups with hydrogenated diisocyanates in an organic solvent and the 2^{nd} step consists in:
I) chain-extension with traditional chain-extenders, and ionomers having the following formula: 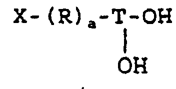 wherein T is an alkylene radical from 1 to 20 C atoms and wherein R and a have X = N(R₁)₂ the meaning as defined in claim 1 ; then subsequent dispersion in water and salification with polymerization completion by formation of ureidic bonds; or
II) introduction of ionomers as defined in point I) and then dispersion, salification and polymerization by chain-extension in water with diamines; or
III) introduction of ionomers as defined in point I) and completion of the chain-extension in solvent, to obtain the polymer and then subsequent dispersion and salification in water of the so obtained polymer.

8. Process according to claim 7 wherein the ionomer has formula: 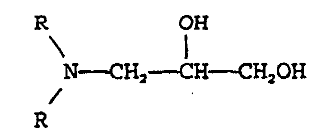 wherein the R groups have the same meaning of R₁.

9. Process according to claims 7-8, wherein the (per)fluoro polyether units have average molecular weight comprised from 500 to 3000 and containing repetitive units selected from: 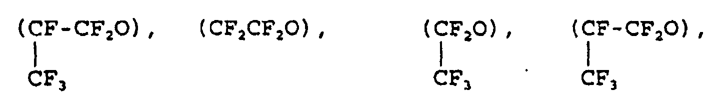 (CF₂CF₂CF₂O), (CF₂CF₂CH₂O), said units being statistically distributed along the polymeric chain.

10. Process according to claim 9, wherein the (per)fluoro polyether units in the polyurethane chain have formula
- (OCF₂CF₂O)_{n'} (CFO)_{m'} - with random distribution of perfluorooxyalkylene units, m' and n' are integers such as to meet the aforesaid requirements.

11. Process according to claims 7-10, wherein the molecular weight of the fluorinated polyurethane ranges from 20000 to 30000, the fluorine content being comprised between 30% and 40% by weight.

## Patentansprüche

1. Fuorierte Polyurethane, wobei der fluorierte Teil in der Polyurethankette aus (Per)Fluorpolyethereinheiten gemacht ist, die Polyurethane haben Nummer durchschnittliches Molekulargewicht von wenigstens 9000 und einen Fluorgehalt größer als 25 Gewichts% und haben in ihrer Struktur hydrophile kationische Gruppen als Seitengruppen in Bezug auf die polymere Polyurethankette gegenwärtig, die hydrophile kationischen Gruppen sind von der Polyurethankette durch ein bivalentes alkylenisches Radikal(R)ₐ getrennt, wobei R CR₁R₂ ist, a ist ein Integer von 1 bis 20 und wobei R₁ und R₂ gleich oder verschieden voneinander, H sind, aliphatische Radikale mit von 1 bis 10 Kohlenstoffatomen; die fluorierten Polyurethane erhältlich durch einen Zweischritt Polymerisationsprozeß, wobei in dem 1. Schritt ein fluoriertes Diisocyanatprepolymer durch Reagieren eines (Per)Fluorpolyethers (PFPE) mit alkoholischen oder acidischen Endgruppen mit hydrierten Diisocyanaten in einem organischen Lösungsmittel hergestellt wird, und der 2. Schritt besteht aus:
I) Kettenverlängerung mit traditionellen Kettenverlängerern und Ionomeren mit der folgenden Formel: 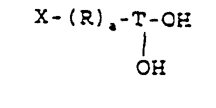 wobei T ein alkylenisches Radikal von 1 bis 20 Kohlenstoffatomen ist, X = N(R₁)₂, R hat die Bedeutung wie oben aufgezeigt; dann im Anschluß Dispersion in Wasser und Salzbildung mit Polymerisationsbeendigung durch Formation von ureidischen Bindungen; oder
II) Einführung von Ionomeren wie definiert in Punkt I) und dann Dispersion, Salzbildung und Polymerisation durch Kettenverlängerung in Wasser mit Diaminen; oder
III) Einführung von Ionomeren wie definiert in Punkt I) und Vervollständigung der Kettenverlängerung in Lösungsmittel, um den Polymer zu erhalten und dann im Anschluß Dispersion und Salzbildung in Wasser des so erhaltenen Polymers.

2. Polyurethane nach Anspruch 1, wobei der Ionomer die Formel 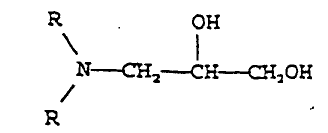 hat, worin die R-Gruppen die gleiche Bedeutung von R₁ haben.

3. Polyurethane nach Ansprüchen 1-2, wobei die (Per)Fluorpolyethereinheiten ein durchschnittliches Molekulargewicht umfassend von 500 bis 3000 haben und sich wiederholende Einheiten enthalten, ausgewählt aus: 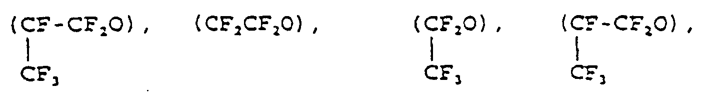 (CF₂CF₂CF₂O), (CF₂CF₂CH₂O),
die Einheiten sind statistisch entlang der Polymerkette verteilt.

4. Polyurethane nach Anspruch 3, wobei die (Per)fluorpolyethereinheiten die Formel
- (OCF₂CF₂O)ₙ, (CFO)_{m'} -
haben, mit zufälliger Verteilung von Perfluoroxyalkyleneinheiten, m' und n' sind solche Integer, um ein Molekulargewicht von 500 bis 3000 zu haben.

5. Polyurethane nach Ansprüchen 1-4, wobei das Molekulargewicht der fluorierten Polyurethane von 20000 bis 30000, der Fluorgehalt von 30 % bis 40 Gewichts%, rangiert.

6. Verfahren zum Schützen von Holz, Marmor, Steinen, Ziegel, Gips/Putz oder Zement vor Degradation, verursacht durch atmosphärische und umweltverschmutzende Agenzien, welches die Anwendung wäßriger Dispersion der fluorierten Polyurethane der Ansprüche 1-5 als schützende Agenzien auf der Oberfläche der Materialien umfaßt.

7. Verfahren zum Herstellen der Polyurethane nach Anspruch 1 durch eine Zweischritt Polymerisation, wobei in dem 1. Schritt ein fluoriertes Diisocyanatprepolymer durch Reagieren eines (Per)Fluorpolyethers (PFPE) mit alkoholischen oder acidischen Endgruppen mit hydrierten Diisocyanaten in einem organischen Lösungsmittel hergestellt wird, und der zweite Schritt besteht aus:
I) Kettenverlängerung mit traditionellen Kettenverlängerern und Ionomeren mit der folgenden Formel: 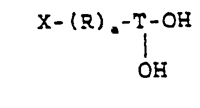 wobei T ein alkylenisches Radikal von 1 bis 20 C-Atomen ist, X = N(R₁)₂, die Bedeutung wie in Anspruch 1 definiert; dann im Anschluß Dispersion in Wasser und Salzbildung mit Polymerisationsbeendigung durch Formation von ureidischen Bindungen; oder
II) Einführung von Ionomeren wie definiert in Punkt I) und dann Dispersion, Salzbildung und Polymerisation durch Kettenverlängerung in Wasser mit Diaminen; oder
III) Einführung von Ionomeren wie definiert in Punkt I) und Vervollständigung der Kettenverlängerung in Lösungsmittel, um den Polymer zu erhalten und dann im Anschluß Dispersion und Salzbildung in Wasser des so erhaltenen Polymers.

8. Verfahren nach Anspruch 7, wobei der Ionomer die Formel 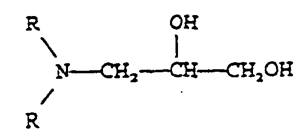 hat, wobei die R-Gruppen dieselben Bedeutungen von R₁ haben.

9. Verfahren nach Ansprüchen 7-8, wobei die (Per)Fluorpolyethereinheiten ein durchschnittliches Molekulargewicht umfassend von 500 bis 3000 haben und sich wiederholende Einheiten enthalten, ausgewählt aus: 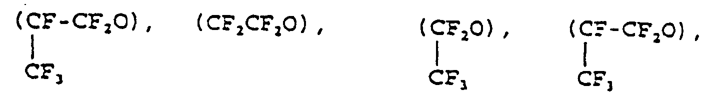 (CF₂CF₂CF₂O), (CF₂CF₂CH₂O),
die Einheiten sind statistisch entlang der Polymerkette verteilt.

10. Verfahren nach Anspruch 9, wobei die (Per)fluorpolyethereinheiten in der Polyurethankette die Formel
- (OCF₂CF₂O)_{n'} (CFO)_{m'} -
haben, mit zufälliger Verteilung von Perfluoroxyalkyleneinheiten, m' und n' sind Integer um die vorstehenden Erforderlichkeiten zu erfüllen.

11. Verfahren nach Ansprüchen 7-10, wobei das Molekulargewicht der fluorierten Polyurethane von 20000 bis 30000 rangiert, der Fluorgehalt ist zwischen 30 % und 40 Gewichts% umfaßt.

## Revendications

1. Polyuréthanes fluorés dans lesquels la partie fluorée est constituée de motifs (per)fluoropolyéther dans la chaîne de polyuréthane, ledit polyuréthane ayant une masse moléculaire moyenne en nombre d'au moins 9000 et une teneur en fluor supérieure à 25 % en poids et ayant dans leur structure des groupes cationiques hydrophiles présents à titre de groupes latéraux par rapport à la chaîne polymére de polyuréthane, lesdits groupes cationiques hydrophiles étant séparés de la chaîne de polyuréthane par un radical alkylénique bivalent (R)ₐ, où R est CR₁R₂, a est un entier de 1 à 20 et où R₁ et R₂, identiques ou différents l'un de l'autre, sont H, des radicaux aliphatiques ayant de 1 à 10 atomes de carbone ;
ledit polyuréthane fluoré pouvant être obtenu par un procédé de polymérisation en deux étapes dans lequel, dans la première étape, un prépolymère de diisocyanate fluoré est préparé par réaction d'un (per)fluoropolyéther (PFPE) ayant des groupes terminaux alcool ou acide avec des diisocyanates hydrogénés dans un solvant organique, et la deuxième étape consiste en :
I) une extension de chaîne avec des agents d'allongement de chaîne traditionnels et des ionomères ayant la formule suivante : 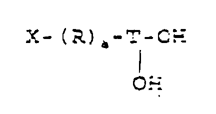 dans laquelle T est un radical alkylène ayant de 1 à 20 atomes de C, X = N(R₁)₂, R a la signification indiquée ci-dessus ; puis une dispersion subséquente dans de l'eau et une salification avec achèvement de la polymérisation par formation de liaisons uréidiques ;
ou
II) l'introduction d'ionoméres tels que définis au point I) et ensuite une dispersion, une salification et une polymérisation par extension de chaîne dans de l'eau avec des diamines ;
ou
III) l'introduction d'ionomères tels que définis au point 1) et l'achèvement de l'extension de chaîne dans un solvant, pour obtenir le polymère et ensuite une dispersion subséquente et une salification dans de l'eau du polymère ainsi obtenu.

2. Polyuréthanes selon la revendication 1, dans lesquels l'ionomére répond à la formule : 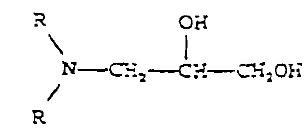 dans laquelle les groupes R ont la même signification que R₁.

3. Polyuréthanes selon les revendications 1 - 2, dans lesquels les motifs (per)fluoropolyéther ont une masse moléculaire moyenne comprise entre 500 et 3000 et contiennent des motifs répétitifs choisis parmi : 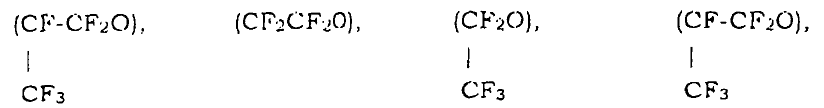 (CF₂CF₂CF₂O), (CF₂CF₂CH₂O), lesdits motifs étant statistiquement. distribués le long de la chaîne polymère.

4. Polyuréthanes selon la revendication 3, dans lesquels les motifs (per)fluoropolyéther répondent à la formule :
-(OCF₂CF₂O)ₙ (CFO)_{m'}-
avec une distribution statistique des motifs perfluorooxyalkyléne, m' et n' sont des entiers tels que la masse moléculaire soit de 500 à 3000.

5. Polyuréthanes selon les revendications 1 - 4, dans lesquels la masse moléculaire du polyuréthane fluoré est située dans la plage allant de 20 000 à 30 000, et la teneur en fluor est de 30 à 40 % en poids.

6. Procédé pour protéger du bois, du marbre, de la pierre, de la brique, du plâtre ou du ciment contre une dégradation provoquée par des agents atmosphériques et des polluants, qui comprend l'application sur la surface desdits matériaux, à titre d'agents protecteurs, de dispersions aqueuses des polyuréthanes fluorés des revendications 1 - 5.

7. Procédé pour préparer les polyuréthanes de la revendication 1 par une polymérisation en deux étapes, dans laquelle, dans la première étape, un prépolymère de diisucyanate fluoré est préparé par réaction d'un (per)fluoropolyéther (PFPE) ayant des groupes terminaux alcool ou acide avec des diisocyanates hydrogénés dans un solvant organique, et la deuxiéme étape consiste en :
I) une extension de chaîne avec des agents d'allongement de chaîne traditionnels et des ionomères ayant la formule suivante : 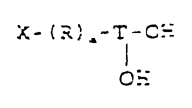 dans laquelle T est un radical alkyléne ayant de 1 à 20 atomes de C, X = N(R₁)₂, et dans laquelle R et a ont la signification définie dans la revendication 1 ; puis une dispersion subséquente dans de l'eau et une salification avec achèvement de la polymérisation par formation de liaisons uréidiques ;
ou
II) l'introduction d'ionomères tels que définis au point I) et ensuite une dispersion, une salification et une polymérisation par extension de chaîne dans de l'eau avec des diamines;
ou
III) l'introduction d'ionomères tels que définis au point I) et l'achévement de l'extension de chaîne dans un solvant, pour obtenir le polymère et ensuite une dispersion subséquente et une salitication dans de l'eau du polymère ainsi obtenu.

8. Procédé selon la revendication 7, dans lequel l'ionomère répond à la formule : 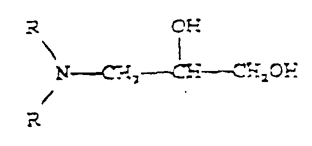 dans laquelle les groupes R ont la même significacion que R₁.

9. Procédé selon les revendications 7 - 8, dans lequel les motifs (per)fluoropolyéther ont une masse moléculaire moyenne comprise entre 500 et 3000 et contiennent des motifs répétitifs choisis parmi : 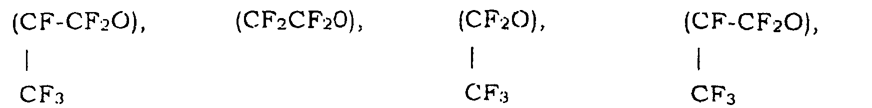 (CF₂CF₂CF₂O), (CF₂CF₂CH₂O), lesdit motifs étant statistiquement distribués le long de la chaîne polymère.

10. Procédé selon la revendication 9, dans lequel les motifs (per)fluoropolyéther répondent à la formule :
-(OCF₂CF₂O)ₙ' (CFO)ₘ'-
avec une distribution statistique des motifs perfluorooxyalkylène, m' et n' sont des entiers tels que l'on réponde aux exigences exposées ci-dessus.

11. Procédé selon les revendications 7 - 10, dans lequel la masse moléculaire du polyuréthane fluoré est située dans la plage allant de 20 000 à 30 000, la teneur en fluor étant comprise entre 30 et 40% en poids.
